# EUROPÄISCHE PATENTANMELDUNG

(11) **EP 3 878 914 A1**
(43) Veröffentlichungstag der Anmeldung: **15.09.2021**
(21) Anmeldenummer: 20162843.5
(22) Anmeldetag: 12.03.2020
(51) Int. Cl.: C09D 175/04, C08G 18/71, C08G 18/77, C08G 18/79, C08G 18/02, C08G 18/28, C08G 18/78

(54) **VERWENDUNG SPEZIELLER OFFENKETTIGER ETHERISOCYANATE**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft eine Verwendung mindestens eines offenkettigen, ggf. verzweigten, Etherisocyanats mit einer NCO-Funktionalität ≥ 1, bei dem sich zwischen mindestens einer NCO-Gruppe und mindestens einem Ether-Sauerstoffatom 2 oder 3 Kohlenstoffatome befinden, optional in Gegenwart weiterer Reaktionspartner wie Alkohole, Amine, Wasser, CO₂, oder auch weiterer Isocyanate mit einer NCO-Funktionalität ≥ 1, optional in Gegenwart mindestens eines Katalysators, zur Steigerung der Reaktionsgeschwindigkeit und/oder Reduzierung der optional benötigten Katalysatormenge bei der Isocyanatmodifizierung. Außerdem betrifft die Erfindung auch ein Zwei-Komponenten-System sowie die daraus erhältlichen Formkörper, Beschichtungen und Verbundteile.

## Beschreibung

Die Erfindung betrifft die Verwendung von speziellen, offenkettigen Ethergruppen enthaltenden Isocyanaten, im weiteren Text auch als "Etherisocyanate" bezeichnet. Außerdem betrifft die Erfindung auch ein Zwei-Komponenten-System, umfassend die speziellen Etherisocyanate, sowie die daraus erhältlichen Formkörper, Beschichtungen und Verbundteile.

Die Oligo- bzw. Polymerisierung von Isocyanaten insbesondere unter Bildung von höhermolekularen Oligomerengemischen mit Urethan- ("Prepolymer"), Allophanat-, Harnstoff-, Biuret-, Oxadiazintrion-, Carbodiimid-, Uretdion- ("Dimer"), Isocyanurat- ("Trimer") und/oder Iminooxadiazindionstrukturen ("asymmetrisches Trimer") im Molekülgerüst ist seit langem bekannt. Wie vorstehend erkennbar, liegen der Oligo- bzw. Polymerisierung von Isocyanaten prinzipiell die gleichen chemischen Reaktionen zugrunde. Die Umsetzung einer kleineren Anzahl von Isocyanaten miteinander bezeichnet man als Oligomerisierung. Die Umsetzung einer größeren Anzahl von Isocyanaten bezeichnet man als Polymerisierung. Im Rahmen der vorliegenden Erfindung wird die vorstehend beschriebene Oligomerisierung bzw. Polymerisierung von Isocyanaten zusammenfassend als Isocyanatmodifizierung oder Modifizierung von Isocyanaten bezeichnet. Zusammenfassend werden in der vorliegenden Patentschrift alle aus derartigen Verfahren resultierenden Produkte als Polyisocyanate, kurz PIC, bezeichnet. Enthalten die PIC freie NCO-Gruppen, die ggf. auch mit Blockierungsmitteln vorübergehend desaktiviert worden sein können, sind sie außerordentlich hochwertige Ausgangsstoffe für die Herstellung einer Vielzahl von Polyurethan-Kunststoffen und Beschichtungsmitteln.

Es haben sich eine Reihe technischer Verfahren zur Isocyanatmodifizierung etabliert, wobei man in der Regel das zu modifizierende Isocyanat, meist ein Diisocyanat, mit geeigneten Reaktionspartnern umsetzt; das sind Alkohole bzw. Thiole bei PIC vom (Thio)urethan-("Prepolymer") bzw. (Thio)allophanattyp, Amine oder auch Wasser bei PIC vom Harnstoff- bzw. Biurettyp, CO₂ bei PIC vom Oxadiazintriontyp, oder auch Isocyanatgruppen selbst, woraus insbesondere die sog. "Trimeren" (PIC vom Isocyanurat/Iminooxadiazindiontyp), die sogenannten "Dimeren" (PIC vom Uretdiontyp) und schließlich die Carbodiimide/Uretonimine resultieren. Bei der Carbodiiimidbildung wird je 2 mol NCO 1 mol CO₂ freigesetzt. Die Uretoniminbildung erfolgt in der Regel in Gegenwart überschüssiger Isocyanatgruppen bei niedriger Temperatur spontan und ist thermisch reversibel.

Der überwiegende Teil der zur PIC-Bildung durchgeführten Reaktionen verläuft durch Zusatz von Katalysatoren in der Regel unter Teilumsatz der beteiligten Isocyanatgruppen. Die beabsichtigte Reaktion wird abgebrochen, wenn der gewünschte Umsatzgrad U_{NCO} des zu modifizierenden Isocyanates bzw. Isocyanatgemisches erreicht ist oder durch Wahl der Menge an umzusetzendem Alkohol/Polyol bzw. Thiol/Polythiol determiniert.

Bei den vorstehend genannten Reaktionen der Isocyanatgruppen untereinander wird der in der Regel verwendete Katalysator vor dem vollständigen Umsatz aller im Ausgangsgemisch vorliegenden Isocyanatgruppen durch geeignete Maßnahmen unwirksam gemacht (deaktiviert) oder abgetrennt und das erhaltene PIC anschließend in der Regel von den nicht umgesetzten Monomeren separiert. Eine Zusammenstellung dieser Verfahren des Standes der Technik findet sich in H. J. Laas et al., J. Prakt. Chem. 1994, 336, 185 ff.

Aliphatische Isocyanate weisen gegenüber aromatischen Isocyanaten sowohl in Reaktionen mit anderen Reaktionspartnern (OH/SH-Gruppen enthaltende Verbindungen) als auch untereinander eine signifikant geringere Reaktionsgeschwindigkeit auf. Das führt dazu, dass der überwiegende Teil dieser Reaktionen katalysiert bzw., wo die nicht möglich oder unerwünscht ist, bei höherer Temperatur durchgeführt werden muss, was häufig nachteilig ist.

Aufgabe der Erfindung war es daher Polyisocyanate aus aliphatischen Isocyanaten herzustellen, bei denen diese Nachteile nicht, bzw. in geringerem Ausmaß auftreten, die "intrinsisch" katalysiert sind.

Wie nun überraschenderweise gefunden wurde, ist dies bei speziellen offenkettigen, ggf. verzweigten, Ethergruppen enthaltenden Isocyanaten, im weiteren Text auch als "Etherisocyanate" bzw. "Etherisocyanaten" bezeichnet, der Fall.

Etherisocyanate sind seit langem allgemein bekannt. Insbesondere durch die Gasphasenphosgenierung kommerziell verfügbarer Amine ist der technische Zugang zu ihnen deutlich erleichtert, was in EP 0 764 633 A2 und dem darin zitierten Stand der Technik beschrieben ist. Aus den Etherisocyanaten hergestellte Polyisocyanate werden dagegen nicht offenbart.

Gegenstand der Erfindung ist die Verwendung mindestens eines offenkettigen, ggf. verzweigten, Etherisocyanats mit einer NCO-Funktionalität ≥ 1, bei dem sich zwischen mindestens einer NCO-Gruppe und mindestens einem Ether-Sauerstoffatom 2 oder 3 Kohlenstoffatome befinden, optional in Gegenwart weiterer Reaktionspartner wie Alkohole, Amine, Wasser, CO₂, oder auch weiterer Isocyanate mit einer NCO-Funktionalität ≥ 1, optional in Gegenwart mindestens eines Katalysators zur Steigerung der Reaktionsgeschwindigkeit und/oder Reduzierung der optional benötigten Katalysatormenge bei der Isocyanatmodifizierung.

Bevorzugt bedeuten die Bezugnahmen auf "umfassend", "enthaltend" usw. "im Wesentlichen bestehend aus" und ganz besonders bevorzugt "bestehend aus".

In einer ersten bevorzugten Ausführungsform ist die Verwendung dadurch gekennzeichnet, dass das mindestens eine offenkettige, ggf. verzweigte, Etherisocyanat eine NCO-Funktionalität von 2 aufweist und sich wenigstens zwischen einer der beiden NCO-Gruppen und dem mindestens einen Ether-Sauerstoffatom 2 oder 3 Kohlenstoffatome befinden.

Als Reaktionspartner für die Bereitstellung der PIC können neben den offenkettigen, ggf. verzweigten, Etherisocyanaten selbst die in der Polyurethanchemie üblichen, in der Regel di- und höherfunktionellen Reaktionspartner mit Zerevitinoff-aktivem Wasserstoff zum Einsatz kommen, beispielsweise Wasser, Alkohole, Thiole und Amine. Vorzugsweise haben diese Verbindungen eine mittlere OH-, NH- bzw. SH-Funktionalität von mindestens 1,5 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, kurzkettige Polyamine aber auch Polyasparaginsäureester, Polythiole und/oder Polyhydroxyverbindungen wie Polyetherpolyole, Polyesterpolyole, Polyurethanpolyole, Polysiloxanpolyole, Polycarbonatpolyole, Polyetherpolyamine, Polybutadienpolyole, Polyacrylatpolyole und/oder Polymethacrylatpolyole sowie deren Mischpolymerisate.

Somit ist nach einer weiteren bevorzugten Ausführungsform bei der erfindungsgemäßen Verwendung oder dem erfindungsgemäßen Verfahren mindestens ein weiterer Reaktionspartner ausgewählt aus der Gruppe bestehend aus Alkohole, Amine, Wasser, CO₂ und weiteren Isocyanaten mit einer NCO-Funktionalität ≥ 1, die vorzugsweise keine Ethergruppe enthalten, zugegen.

Als optional mitzuverwendende Katalysatoren für die NCO-NCO-Reaktionen ohne Einbindung weiterer Reaktionspartner können prinzipiell alle Spezies zum Einsatz kommen, die als katalytisch aktiv gegenüber Isocyanaten bekannt sind. Dazu zählen neben ionisch aufgebauten Verbindungen z.B. mit "Onium"-Kationen (Ammonium, Phosphonium, usw.) und nukleophilen Anionen wie Hydroxid, Alkanoat, Carboxylat, Heterocyclen mit mindestens einem negativ geladenen Stickstoffatom im Ring, insbesondere Azolat, Imidazolat, Triazolat, Tetrazolat, Fluorid, Hydrogendifluorid, höhere Polyfluoride oder Mischungen von diesen (Addukte von mehr als einem Äquivalent HF an Fluorid-Ionen enthaltenden Verbindungen), wobei die Fluoride, Hydrogendifluoride und höheren Polyfluoride unter geeigneten Reaktionsbedingungen zu Produkten mit höherem Iminooxadiazindiongruppengehalt führen können, auch Neutralbasen wie z.B. tert. Amine oder Phosphane (Phosphine). Insbesondere bei letzteren ist durch strukturelle Variation ein breiter Selektivitätsbereich abdeckbar; von hoher Uretdion-Selektivität bis hin zu hoher "Trimer"-Selektivität, wobei im Falle der Letztgenannten typischerweise Mischungen aus Isocyanuraten und Iminooxadiazindionen entstehen.

Die optionalen Katalysatoren können einzelnen oder in beliebigen Mischungen untereinander verwendet werden. So liegen die Lösungen quaternärer Ammoniumhydroxide in verschiedenen Alkoholen je nach pKₛ-Wert der Base und des verwendeten Alkohols teilweise oder vollständig als Ammoniumsalze mit Alkoholat-Anion vor. Dieses Gleichgewicht kann durch Entfernung des aus dieser Reaktion resultierenden Reaktionswassers ganz auf die Seite vollständiger Alkoholatbildung verschoben werden. Als Methoden zur Wasserentfernung eignen sich dabei alle aus der Literatur hierfür bekannten Methoden, insbes. die (Azeotrop)destillation, letztere ggf. unter Zuhilfenahme eines geeigneten Schleppmittels, wenn sich der als Lösemittel verwendete Alkohol nicht als solches eignet.

Mit der erfindungsgemäßen Verwendung oder dem erfindungsgemäßen Verfahren ist ganz allgemein eine breite Palette qualitativ hochwertiger, reaktiver und deshalb für den Polyurethansektor sehr wertvoller Polyisocyanate in einfacher Weise zugänglich. Abhängig vom verwendeten Ausgangs(di)isocyanat, Reaktionspartner und den Reaktionsbedingungen entstehen beim Verfahren Polyisocyanate vom sog. Urethan- ("Prepolymer"), Allophanat-, Harnstoff-, Biuret-, Oxadiazintrion-, Carbodiimid-, Uretdion- ("Dimer"), Isocyanurat- ("Trimer") und/oder Iminooxadiazindion- ("asymmetrisches Trimer") Strukturtyp. In der Regel entstehen Gemische, die mehrere der vorstehend genannten Strukturtypen beinhalten. Somit ist die Verwendung, wobei aus dem mindestens einen offenkettigen, ggf. verzweigten, Etherisocyanat modifizierte Isocyanate mit Urethan-, Harnstoff-, Biuret-, Dimer-, Isocyanurat-, Iminooxadiazindion- und/oder Carbodiimidstruktur hergestellt werden eine weitere bevorzugte Ausführungsform der vorliegenden Erfindung.

Bei der erfindungsgemäßen Verwendung oder dem erfindungsgemäßen Verfahren kann weiter vorgesehen sein, dass die Oligomerisierung unter Anwesenheit eines Lösungsmittels und/oder Additivs durchgeführt wird.

Bei der erfindungsgemäßen Verwendung oder dem erfindungsgemäßen Verfahren können prinzipiell alle offenkettigen, ggf. verzweigten, Etherisocyanate der eingangs genannten Struktur, also Mono-, Di- oder Polyisocyanate, bei dem sich zwischen mindestens einer NCO-Gruppe und mindestens einem Ether-Sauerstoffatom 2 oder 3 Kohlenstoffatome befinden, einzeln oder in beliebigen Mischungen untereinander sowie mit weiteren Isocyanaten des Standes Technik eingesetzt werden.

Beispielhaft als erfindungsgemäß zu verwendende Etherisocyanate seien sämtliche Regio- und (optional, wo möglich) Stereoisomeren der folgenden, offenkettigen, ggf. verzweigten, Isocyanate genannt, in denen sich zwischen mindestens einer NCO-Gruppe und mindestens einem Ether-Sauerstoffatom 2 oder 3 Kohlenstoffatome befinden:
Methoxyethylisocyanat, Methoxypropylisocyanat, Methoxybutylisocyanat, Methoxypentylisocyanat, Methoxyhexylisocyanat, Methoxyheptylisocyanat, Methoxyoctylisocyanat, Methoxydecylisocyanat, Ethoxyethylisocyanat, Ethoxypropylisocyanat, Ethoxybutylisocyanat, Ethoxypentylisocyanat, Ethoxyhexylisocyanat, Ethoxyheptylisocyanat, Ethoxyoctylisocyanat, Ethoxydecylisocyanat, Propoxyethylisocyanat, Propoxypropylisocyanat, Propoxybutylisocyanat, Propoxypentylisocyanat, Propoxyhexylisocyanat, Propoxyheptylisocyanat, Propoxyoctylisocyanat, Propoxydecylisocyanat, Butoxyethylisocyanat, Butoxypropylisocyanat, Butoxybutylisocyanat, Butoxypentylisocyanat, Butoxyhexylisocyanat, Butoxyheptylisocyanat, Butoxyoctylisocyanat, Butoxydecylisocyanat, Pentoxyethylisocyanat, Pentoxypropylisocyanat, Pentoxybutylisocyanat, Pentoxypentylisocyanat, Pentoxyhexylisocyanat, Pentoxyheptylisocyanat, Pentoxyoctylisocyanat, Pentoxydecylisocyanat, Hexoxyethylisocyanat, Hexoxypropylisocyanat, Hexoxybutylisocyanat, Hexoxypentylisocyanat, Hexoxyhexylisocyanat, Hexoxyheptylisocyanat, Hexoxyoctylisocyanat, Hexoxydecylisocyanat, Heptoxyethylisocyanat, Heptoxypropylisocyanat, Heptoxybutylisocyanat, Heptoxypentylisocyanat, Heptoxyhexylisocyanat, Heptoxyheptylisocyanat, Heptoxyoctylisocyanat, Heptoxydecylisocyanat, Bis(isocyanatoethyl)ether; Bis(isocyanatopropyl)ether; Bis(isocyanatobutyl)ether, Bis(isocyanatopentyl)ether, Bis(isocyanatohexyl)ether, Bis(isocyanatoheptyl)ether, Bis(isocyanatooctyl)ether, Bis(isocyanatodectyl)ether,

Zugänglich sind die vorstehend genannten Isocyanate beispielsweise aus den entsprechenden:
- Alkyl-aminoalkylethern der allg. Formeln H₂N-C(R¹,R²)-C(R³,R⁴)-O-R⁷ und H₂N-C(R¹,R²)-C(R³R⁴)-C(R⁵,R⁶)-O-R⁷, wobei R¹ bis R⁶ unabhängig voneinander für H oder offenkettige oder verzweigte C₁ bis C₂₀ Substituenten (aliphatisch, cycloaliphatisch, araliphatisch, aromatisch) und R⁷ unabhängig voneinander für offenkettige oder verzweigte C₁ bis C₂₀ Substituenten (aliphatisch, cycloaliphatisch, araliphatisch, aromatisch), insbesondere 2-Aminoethyl-methylether, 2-Aminoethyl-ethylether, 2-Aminoethyl-propylether, 2-Aminopropyl-methylether, 2-Aminopropyl-ethylether, 2-Aminopropyl-propylether, 3-Aminopropyl-methylether, 3-Aminopropyl-ethylether, 3-Aminopropyl-propylether,
- Diaminooxoalkanen der allg. Formel H₂N-C(R¹,R²)-C(R³,R⁴)-O-C(R⁵,R⁶)-C(R⁸,R⁹)-NH₂ und H₂N-C(R¹,R²)-C(R³,R⁴)-C(R⁵,R⁶)-O-C(R⁸,R⁹)-C(R¹⁰,R¹¹)-C(R¹²,R¹³)-NH₂ wobei R¹ bis R¹³ die weiter oben für R¹ bis R⁶ definierte Bedeutung haben, insbesondere Bis(2-aminoethyl)ether, Bis(2-aminopropyl)ether, Bis(3-aminopropyl)ether, 2-Aminoethyl-3-aminopropylether sowie technische Gemische der vorstehend genannten Diamine,

- Diamino-(poly)oxoalkanen der allg. Formel H₂N-[C(R¹,R²)-C(R³,R⁴)-O]ₙ-C(R⁵,R⁶)-C(R⁸,R⁹)-NH₂ und H₂N-[C(R¹,R²)-C(R³,R⁴)-C(R⁵,R⁶)-O]ₙ-C(R⁸,R⁹)-C(R¹⁰,R¹¹)-C(R¹²,R¹³)-NH₂ wobei R¹ bis R¹³ die weiter oben für R¹ bis R⁶ definierte Bedeutung haben und n ganze Zahlen zwischen 1 und 6 sein kann, insbesondere 1,8-Diamino-1,5,8-trimethyl-3,6-dioxaoctan, 1,11-Diamino-1,5,8,11-tetramethylundecan sowie alle Isomeren der beiden letztgenannten Verbindungen mit vicinaler O-N-Verknüpfung in reiner Form oder als Gemisch (z.B. als technisches Jeffamin® D 230), Diamino-3,6-dioxaoctan (z. B. als technisches Jeffamin® EDR 148), 1,10-Diamino-4,7-dioxadecan, 1,12-Diamino-4,9-dioxadodecan, 1,14-Diamino-3,10-dioxatetradecan, 1,13-Diamino-4,7,10-trioxatridecan und andere,
- Triamino-(poly)oxoalkanen wie z.B. 1,7-Diamino-2,6-dioxa-4-aminomethoxy-heptan, 1-Amino-2-oxa-3,3-bis(aminomethoxy)hexan, 1,9-Diamino-3,7-dioxa-5-(1-amino-2-ethoxy)-nonan, 1-Amino-3-oxa-4,4-bis(1-amino-2-ethoxy)heptan, 1,11-Diamino-4,8-dioxa-6-(1-amino-5-oxabutyl)undecan, 1-Amino-4-oxa-5,5-bis(1-amino-5-oxabutyl)octan sowie Gemische der vorstehend genannten Mono-, Di- sowie Triamine.

Die dabei als Ausgangsstoff einzusetzenden Amine können beispielsweise
(1.) durch Alkoxylierung von Wasser oder anderer, ggf. poly-, OH-funktioneller Verbindungen wie Alkohole, Phenole und/oder Carbonsäuren sowie anschließende Aminierung, beispielsweise wie in der franz. Patentschrift 1 361 810 beschrieben,
(2.) durch Polymerisation von Tetrahydrofuran und, ggf. nach weiterer Umsetzung mit Alkylenoxid, anschließende Behandlung wie unter (1) beschrieben,
(3) durch Cyanethylierung von Wasser und anschließende Hydrierung zum Bis (3-aminopropyl)ether, beschrieben u.a. in der DRP 731 708, oder durch Cyanethylierung anderer, ggf. poly-, OH-funktioneller Verbindungen, insbesondere von Di- und Triolen, sowie anschließende Hydrierung erhalten werden.

Als weitere Isocyanate des Standes der Technik die bei der erfindungsgemäßen Verwendung oder dem erfindungsgemäßen Verfahren in Abmischung mit den offenkettigen, ggf. verzweigten, Etherisocyanaten eingesetzt werden können sind zu nennen: Pentamethylendiisocyanat (PDI), Hexamethylendiisocyanat (HDI), 2-Methylpentan-1,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-Isocyanatomethyl-1-methylcyclohexylisocyanat (IMCI), Isophorondiisocyanat (IPDI), 1,3- sowie 1,4-Bis(isocyanatomethyl)benzen (XDI), 1,3- sowie 1,4-Bis(isocyanatomethyl)cyclohexan (H₆XDI), 2,4- sowie 2,6-Toluylendiisocyanat (TDI), Bis(4-isocyanatophenyl)methan (4,4'MDI), 4-Isocyanatophenyl-2-isocyanatophenylmethan (2,4'MDI) sowie mehrkernige Produkte, die durch Formaldehyd-Anilin-Polykondensation und anschließende Überführung der resultierenden (Poly)amine in die entsprechenden (Poly)isocyanate zugänglich sind (Polymer-MDI).

Besonders bevorzugt sind Pentamethylendiisocyanat (PDI), Hexamethylendiisocyanat (HDI), 2-Methylpentan-1,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-Isocyanatomethyl-1-methylcyclohexylisocyanat (IMCI), Isophorondiisocyanat (IPDI), 1,3- sowie 1,4-Bis(isocyanatomethyl)benzen (XDI), 1,3- sowie 1,4-Bis(isocyanatomethyl)cyclohexan (H₆XDI).

Die Menge an letztgenannten, keine Ethergruppen enthaltenden Isocyanaten richtet sich nach der konkreten Anwendung und kann für den Fall, dass sie überhaupt zum Einsatz kommen, in weiten Grenzen, zwischen 1 und 99 Gew.-%, bezogen auf die Gesamtmenge an NCO-Gruppen aufweisenden Verbindungen, variieren. Will man von dem reaktionsbeschleunigenden Effekt der erfindungsgemäß verwendeten offenkettigen, ggf. verzweigten, Etherisocyanate stärker profitieren, kommen höhere Anteile dieser Etherisocyanate zum Einsatz (50 - 99 Gew.-%).

In einer weiteren bevorzugten Ausführungsform kommen zwischen 1 und 99 Gew.-%, bezogen auf die Gesamtmenge an NCO-Gruppen aufweisenden Verbindungen, des mindestens einen offenkettigen, ggf. verzweigten, Etherisocyanats zum Einsatz, wobei die zu 100 % verbleibende Menge aus ein oder mehreren weiteren Isocyanate mit einer NCO-Funktionalität ≥ 1 besteht. Besonders bevorzugt liegt die Menge zwischen 50 und 90 Gew-%, bezogen auf die Gesamtmenge an NCO-Gruppen aufweisenden Verbindungen, des mindestens einen offenkettigen, ggf. verzweigten, Etherisocyanats zum Einsatz, wobei die zu 100 % verbleibende Menge aus ein oder mehreren weiteren Isocyanate mit einer NCO-Funktionalität ≥ 1 besteht.

Es ist belanglos, nach welchen Verfahren die vorstehend genannten Isocyanate generiert werden, d.h. mit oder ohne Verwendung von Phosgen. Bevorzugt ist bei der technischen Herstellung der offenkettigen, ggf. verzweigten, Etherisocyanate die Gasphasenphosgenierung wie in EP 0 764 633 A2 beschrieben.

Die Menge des bei der erfindungsgemäßen Verwendung oder dem erfindungsgemäßen Verfahren optional einzusetzenden Katalysators richtet sich in erster Linie nach dem verwendeten organischen Isocyanat und der angestrebten Reaktionsgeschwindigkeit und liegt vorzugsweise zwischen ≥ 0,001 und ≤ 4 mol-%, bevorzugt zwischen ≥ 0,002 und ≤ 1,5 mol-%, bezogen auf die Summe der Stoffmengen des eingesetzten Isocyanates und des Katalysators und ist erfindungsgemäß geringer, als bei der ausschließlichen Verwendung aliphatischer Isocyanate die keine Ethergruppe in 2- bzw. 3-Position zur NCO-Gruppe enthalten.

Der optionale Katalysator kann bei der erfindungsgemäßen Verwendung oder dem erfindungsgemäßen Verfahren unverdünnt oder in Lösungsmitteln gelöst eingesetzt werden. Als Lösungsmittel kommen dabei alle Verbindungen in Frage, die nicht mit dem Katalysator reagieren und ihn in ausreichendem Maße zu lösen vermögen, z.B. ggf. halogenierte, aliphatische oder aromatische Kohlenwasserstoffe, Alkohole, Ketone, Ester sowie Ether. Bevorzugt werden Alkohole verwendet.

Die erfindungsgemäße Verwendung oder das erfindungsgemäßen Verfahren kann im Temperaturbereich zwischen 0 °C und + 250 °C, bevorzugt 20 °C bis 200 °C, besonders bevorzugt 40 °C bis 150 °C erfolgen und bei beliebigen Umsetzungsgraden, bevorzugt nachdem 5 bis 80 %, besonders bevorzugt 10 bis 60 %, des eingesetzten Isocyanat(gemisch)es umgesetzt wurden, unterbrochen werden.

Zur Katalysatordeaktivierung bieten sich prinzipiell eine ganze Reihe vorbeschriebener Methoden des Standes der Technik an, wie z.B. die Zugabe (unter- oder über-) stöchiometrischer Mengen an Säuren oder Säurederivaten (z.B. Benzoylchlorid, saure Ester Phosphor oder Schwefel enthaltender Säuren, diese Säuren selbst etc., nicht jedoch HF), adsorptive Bindung des Katalysators und anschließende Abtrennung durch Filtration und andere dem Fachmann bekannte Methoden.

In einer weiteren bevorzugten Ausführungsform wird nicht umgesetztes organisches Isocyanat nach Desaktivierung des Katalysatorsystems nach einem beliebigen Verfahren des Standes der Technik, z.B. durch (Dünnschicht)destillation oder Extraktion, abgetrennt und bevorzugt anschließend wiederverwendet.

Nach einer besonderen, kontinuierlich arbeitenden Ausführungsform kann die Isocyanatmodifizierung kontinuierlich, z.B. in einem Rohrreaktor vorgenommen werden.

Neben der erfindungsgemäßen Verwendung ist ein Verfahren zur Modifizierung von Isocyanaten, umfassend die Umsetzung mindestens eines offenkettigen, ggf. verzweigten, Etherisocyanats mit einer NCO-Funktionalität > 1, bei dem sich zwischen mindestens einer NCO-Gruppe und mindestens einem Ether-Sauerstoffatom 2 oder 3 Kohlenstoffatome befinden, optional in Gegenwart weiterer Reaktionspartner wie Alkohole, Amine, Wasser, CO₂, oder auch weiterer Isocyanate mit einer NCO-Funktionalität > 1 ebenfalls Gegenstand der vorliegenden Erfindung. Für das erfindungsgemäße Verfahren sind die in den Patentansprüchen und in der Beschreibung genannten weiteren Ausführungsformen genauso gültig und können beliebig kombiniert werden, sofern sich aus dem Kontext nicht eindeutig das Gegenteil ergibt.

Die durch die erfindungsgemäße Verwendung oder das erfindungsgemäße Verfahren erhältlichen Produkte bzw. Produktgemische stellen mithin vielseitig verwendbare Ausgangsmaterialien zur Herstellung von, ggf. geschäumte(n), Kunststoffe(n) sowie Lacken, Beschichtungsmitteln, Klebstoffen und Zuschlagstoffen dar.

Ein weiterer Gegenstand der Erfindung ist daher ein modifiziertes Isocyanat, erhältlich oder hergestellt nach dem erfindungsgemäßen Verfahren.

Die Verfahrensprodukte können als solche oder in Verbindung mit anderen Isocyanatderivaten des Standes der Technik, wie z.B. Uretdion-, Biuret-, Allophanat-, Isocyanurat- und/oder UrethanGruppen enthaltenden Polyisocyanaten, deren freie NCO-Gruppen ggf. mit Blockierungsmitteln desaktiviert wurden, eingesetzt werden.

Ein weiterer Gegenstand der vorliegenden Erfindung ist daher ein Ein-Komponenten-System, umfassend mindestens ein modifiziertes Isocyanat auf Basis eines offenkettigen, ggf. verzweigten, Etherisocyanats mit einer NCO-Funktionalität > 1, bei dem sich zwischen mindestens einer NCO-Gruppe und mindestens einem Ether-Sauerstoffatom 2 oder 3 Kohlenstoffatome befinden, dessen freie NCO-Gruppen mit einem oder mehreren Blockierungsmitteln desaktiviert wurden. Geeignete Blockierungsmittel zur Desaktivierung von Isocyanatgruppen sind dem Fachmann bekannt.

Ebenfalls Gegenstände der vorliegenden Erfindung sind ein Zwei-Komponenten-System, enthaltend eine Komponente A), umfassend mindestens ein modifiziertes Isocyanat auf Basis eines offenkettigen, ggf. verzweigten, Etherisocyanats mit einer NCO-Funktionalität ≥ 1, bei dem sich zwischen mindestens einer NCO-Gruppe und mindestens einem Ether-Sauerstoffatom 2 oder 3 Kohlenstoffatome befinden, und eine Komponente B), umfassend mindestens eine NCO-reaktive Verbindung, sowie ein Formkörper oder eine Beschichtung, erhältlich oder hergestellt durch, ggf. unter Wärmeeinwirkung und/oder in Anwesenheit eines Katalysators, Härten eines erfindungsgemäßen Zwei-Komponenten-Systems aber auch die mit mindestens einem erfindungsgemäßen, gegebenenfalls unter Wärmeeinwirkung ausgehärteten, Zwei-Komponenten-System, beschichteten Substrate. Da sich die erfindungsgemäßen modifizierten Isocyanate in den gehärteten Beschichtungen oder Formkörpern wiederfinden, ist ein Verbundbauteil, umfassend einen Werkstoff, der wenigstens mit einem erfindungsgemäßen Formkörper oder einer erfindungsgemäßen Beschichtung zumindest anteilig verbunden ist, ebenfalls Gegenstand der Erfindung. Bei den weiteren Gegenständen dieser Erfindung sind die vorstehend bei der erfindungsgemäßen Verwendung und/oder dem erfindungsgemäßen Verfahren genannten Ausführungsformen ebenfalls gültig und die Bevorzugungen gelten entsprechend, sofern sich aus dem Kontext nicht unmittelbar das Gegenteil ergibt.

Vorliegend hat der Begriff "modifiziertes Isocyanat" die eingangs definierte Bedeutung und steht vorzugsweise für ein Polyisocyanat, welches im statistischen Mittel mindestens 1,5 NCO-Gruppen aufweist.

Als NCO-reaktive Verbindungen der Komponente B) können alle dem Fachmann bekannten Verbindungen - auch in beliebigen Mischungen untereinander - eingesetzt werden, welche eine mittlere OH-, NH- bzw. SH-Funktionalität von mindestens 1,5 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, kurzkettige Polyamine aber auch Polyasparaginsäureester, Polythiole und/oder Polyhydroxyverbindungen wie Polyetherpolyole, Polyesterpolyole, Polyurethanpolyole, Polysiloxanpolyole, Polycarbonatpolyole, Polyetherpolyamine, Polybutadienpolyole, Polyacrylatpolyole und/oder Polymethacrylatpolyole sowie deren Mischpolymerisate, im folgenden Polyacrylatpolyole genannt.

Gemäß einer weiteren bevorzugten Ausführungsform ist die NCO-reaktive Verbindung eine Polyhydroxyverbindung, bevorzugt ein Polyetherpolyol, Polyesterpolyol, Polycarbonatpolyol oder Polyacrylatpolyol.

Das erfindungsgemäße Zwei-Komponenten-System enthält optional Hilfs- und Zusatzstoffen, bei denen es sich beispielsweise um, dem Fachmann bekannte, Cobindemittel, Trocknungsmittel, Füllstoffe, Colöser, Farb- oder Effekt-Pigmente, Verdicker, Mattierungsmittel, Lichtschutzmittel, Lackadditive, wie Dispergiermittel, Verdicker, Entschäumer und andere Hilfsmittel, wie Haftmittel, Fungizide, Bakterizide, Stabilisatoren oder Inhibitoren und Katalysatoren oder Emulgatoren handeln kann.

Die nachfolgenden Vergleichsbeispiele und Beispiele sollen die Erfindung näher erläutern, ohne sie jedoch einzuschränken.

### Beispiele:

Alle Prozentangaben sind, soweit nicht anders vermerkt, als Gewichtsprozent zu verstehen.

Mol%-Angaben wurden ¹H-NMR spektroskopisch ermittelt und beziehen sich immer, wenn nicht anders vermerkt, auf die Summe der NCO-Folgeprodukte. Die Messungen wurden auf den Geräten Bruker DPX 400 bzw. DRX 700 an ca. 5%igen (¹H NMR) bzw. ca. 50%igen (¹³C NMR) Proben in trockenem C₆D₆, wenn nicht anders vermerkt, bei 400 bzw. 700 MHz (¹H NMR) oder 100 bzw. 176 MHz (¹³C NMR) durchgeführt. Als Referenz für die ppm-Skale dienten Tetramethylsilan im Lösemittel ¹H NMR chemical shift 0 ppm. Alternativ wurde im NMR-Lösemittel anwesendes C₆D₅H als Referenzsignal (7,15 ppm, ¹H-NMR) verwendet bzw. das Lösemittelsignal selbst (mittleres Signal des 1:1:1 Tripletts bei 128,0 ppm in der ¹³C NMR. ¹⁵N-NMR chemische Verschiebungen wurden indirekt mittels ¹H-¹⁵N-HMBC-Messungen ermittelt, wobei extern auf (flüssiges) Ammoniak referenziert wurde (0 ppm).

Dynamische Viskositäten wurden bei 23°C mit dem MCR 501-Rheometer (Fa. Anton Paar) gemäß DIN EN ISO 3219:1994-10 bestimmt. Durch Messung bei unterschiedlichen Scherraten wurde sichergestellt, dass von newtonischem Fließverhalten ausgegangen werden kann. Angaben zur Scherrate können daher entfallen.

Der NCO-Gehalt wurde durch Titration gemäß DIN EN ISO 10283:2007-11 ermittelt.

Der Restmonomerengehalt wurde gaschromatographisch nach DIN EN ISO 10283:2007-11 mit internem Standard bestimmt.

GC-MS wurde mit dem Agilent GC6890, ausgestattet mit einer MN 725825.30 Optima-5-MS-Accent Kapilllarsäule (30 m, 0,25 mm Innendurchmesser, 0,5 µm Filmschichtdicke) und einem Massenspektrometer 5973 als Detektor mit Helium als Transportgas (Flussrate 2 ml/min) durchgeführt. Die Säulentemperatur betrug anfangs 60 °C (2 min) und wurde anschließend schrittweise mit 8K/min auf 360 °C erhöht. Für die GC-MS Detektion wurde Elektronenstoßionisation mit 70 eV Ionisationsebnergie benutzt. Als Injektortemperatur wurde 250 °C gewählt.

Größenausschlußchromatographie (engl.: *Size Exclusion Chroamtography, SEC*) wurde gemäß DIN 55672-1:2016-03 mit Tetrahydrofuran als Elutionsmittel durchgeführt.

Röntgenkristallstrukturanalyse erfolgte an einem Oxford Diffraction Xcalibur ausgestattet mit einem CCD-Flächendetektor (Model Ruby), einer Cu_{Kα} Quelle und Osmic Spiegeln als Monochromator bei 106-107 K. Das Program CrysAlis Version 1.171.38.43 (Rigaku 2015) wurde für die Datenaquisition und -reduktion verwendet. SHELXTL Version 6.14 (Bruker AXS, 2003) fand Einsatz für die Strukturlösung.

Die Messung der Hazen-Farbzahl erfolgte spektrophotometrisch nach DIN EN ISO 6271-2:2005-03 mit einem LICO 400-Spektrofotometer der Fa. Lange, DE.

Alle Reaktionen wurden unter einer Stickstoffatmosphäre in vorher im Vakuum bei 150 - 200°C getrockneten Glasapparaturen durchgeführt.

Die verwendeten Diisocyanate sind Produkte der Fa. Covestro. Alle anderen kommerziell zugänglichen Chemikalien wurden von der Fa. Aldrich, D-82018 Taufkirchen, bezogen.

### Herstellung von Ausgangsstoffen für erfindungsgemäße Versuche und Vergleichsversuche:

### A) Herstellung von 4-Methoxy-1-butanamin

### 2-(4-Methoxybutyl)-1H-isoinidol-1,3(2H)-dion

In einem 4-Liter Vierhalskolben wurden 1,4 Liter DMF, 352 g Phthalimid sowie 780 g Cäsiumkarbonat vorgelegt und 400 g 1-Bromo-4-methoxybutan unter Rühren bei 70°C zugetropft. Das Reaktionsgemisch wurde vier Stunden bei dieser Temperatur gehalten, abgekühlt und dann unter Rühren in Eiswasser eingetragen. Das Produkt fällt kristallin aus, wird abfiltriert, auf dem Filter mit Wasser gespült und anschließend im Vakuum getrocknet.
**519,1g (93 % d.Th.)**

### 4-Methoxy-1-butanamin

In einem 4-Liter Vierhalskolben wurden 520 g 2-(4-Methoxybutyl)-1*H*-isoindol-1,3(2*H*)-dion und 167 g Hydrazin-Monohydrat in Methanol vorgelegt und unter Rückfluß zwei Stunden gerührt. Die Lösung wurde abgekühlt und 3%-ige wässrige HCl-Lösung unter Rühren zugegeben.
Der ausfallende Niederschlag wurde abfiltriert und entsorgt. Die Mutterlauge wurde mit 200 ml 50%iger NaOH-Lösung stark alkalisch gestellt und das Produkt mit Diethylether extrahiert. Nach Trocknen mit Magnesiumsulfat wurde eingeengt und destilliert.
**295 g (79 % d.Th.)**

### B) Herstellung der Etherisocyanate und Vergleichsverbindungen mit einer NCO-Funktion

In einem 1-Liter Vierhalskolben mit wirksamem Magnetrührer, Tropftrichter mit Druckausgleich, Innentemperaturkontrolle, aufgesetzter 40 cm langer Vigreuxkolonne und daran anschließendem Dephlegmator wurden jeweils ein Gemisch bestehend aus 2 mol Isophorondiisocyanat und 2 mol Desmodur® 2460 M (Gemisch aus 4,4'- und 2,4'-Diphenylmethandiisocyanat) vorgelegt und 1 mol des in das jeweilige Isocyanat zu überführenden Monoamins in den Tropftrichter mit Druckausgleich eingewogen. Unter Rühren wurde das vorgelegte Diisocyanat anschließend auf Innentemperatur 150 - 160°C gebracht und das Monoamin zügig in das hochsiedende Diisocyanatgemisch getropft (Exothermie bis ca. 180°C) und übergehendes Destillat diskontinuierlich abgenommen. Anschließend wurde durch schrittweise Reduktion des Anlagendruckes so lange Destillat abgenommen, bis am Kopf die Siedetemperatur des hochsiedenden Diisocyanatgemisches erreicht wurde.

Die so erhaltenen Destillate wurden anschließend fraktioniert um die reinen Monoisocyanate **1 - 6** in 70 - 90%iger Ausbeute, bezogen auf eingesetztes Amin, zu gewinnen.

**Tabelle 1: Monoisocyanate**

| **Nr. und Formel** | **Kp [°C] bei** | **p [mbar]** | **n_{D}²⁰** |
|---|---|---|---|
| **1** CH₃OCH₂CH₂NCO | 68 | 120 | 1,4082 |
| **2** CH₃OCH₂C(H,CH₃)NCO | 67 | 92 | 1,4090 |
| **3** CH₃OCH₂CH₂CH₂NCO | 73 | 80 | 1,4171 |
| **4** CH₃CH₂CH₂CH₂NCO | 115 | 1013 | 1,4060 |
| **5** CH₃CH₂CH₂C(H,CH₃)NCO | 71 | 153 | 1,4077 |
| **6** CH₃OCH₂CH₂CH₂CH₂NCO | 80 | 40 | 1,4242 |

Die Herstellung der in den Beispielen 2 bis 4 verwendeten Diisocyanate mit Etherfunktion erfolgte in Analogie zur Verfahrensweise aus Beispiel 1 der EP 0 764 633 A2.

### Beispiele 1a bis 1i Urethanisierung (1a bis 1e: erfindungsgemäß, 1f bis 1i: Vergleichsbeispiele)

In 250 ml Dreihalskolben mit Septum für die Dosierung des jeweils verwendeten Isocyanates, Innentemperaturkontrolle und Rückflußkühler wurden unter Magnetrühren jeweils 1,5 mol n-Butanol auf 50°C erwärmt und anschließend 0,1 mol des jeweiligen Monoisocyanates bzw. 0,05 mol des jeweiligen Diisocyanates schnell eingespritzt. Durch Entfernung des Heizbades und - insbes. bei 1a anfangs - ggf. nötige Kühlung mit einem Eisbad wurde die Innentemperatur bei 50°C gehalten.

In regelmäßigen Abständen wurde der NCO-Gehalt und somit der Umsatz titrimetrisch verfolgt. Die Zeit (t_{1/2}), nach der nur noch 50% der ursprünglich vorhandenen NCO-Gruppen vorlagen, wurde zum Vergleich der Reaktivität der in den erfindungsgemäßen (1a bis 1e) sowie Vergleichsversuchen (1f bis 1i) eingesetzten Isocyanate herangezogen, vgl. Tabelle 2.

**Tabelle 2: Urethanisierungen**

| **Beispiel 1** | **Eingesetztes Isocyanat** | **t_{1/2} [sec]** |
|---|---|---|
| **a** | CH₃OCH₂CH₂NCO | 1740 |
| **b** | CH₃OCH₂C(H,CH₃)NCO | 3650 |
| **c** | CH₃OCH₂CH₂CH₂NCO | 2200 |
| **d** | OCNCH₂CH₂OCH₂CH₂NCO | 900 |
| **e** | OCNCH₂CH₂CH₂OCH₂CH₂CH₂NCO | 2300 |
| **f** | CH₃CH₂CH₂CH₂NCO | 2900 |
| **g** | CH₃CH₂CH₂C(H,CH₃)NCO | 10000 |
| **h** | CH₃OCH₂CH₂CH₂CH₂NCO | 2900 |
| **i** | OCNCH₂CH₂CH₂CH₂CH₂CH₂NCO | 2500 |

Wie man am Vergleich der t_{1/2}-Werte gut erkennt, sind die strukturell vergleichbaren Isocyanate bei Vorliegen eines Ether-Sauerstoffatomes in 2- bzw. 3-Position zur NCO-Gruppe immer deutlich reaktiver, als die Pendants mit CH₂-Gruppe an Stelle Sauerstoff. Auch wenn an sekundäre C-Atome gebundene Isocyanatgruppen generell weniger reaktiv sind, als solche, die an primäre C-Atome gebunden sind, zeigt der Vergleich der Resultate aus Beispiel 1b (erfindungsgemäß) mit Beispiel 1g (Vergleich), dass auch hier eine beträchtliche Aktivierung der NCO-Gruppe hinsichtlich der Urethanisierungsreaktion zu verzeichnen ist. Dieser Effekt ist bei den O-C-C-NCO-verknüpften Derivaten deutlicher ausgeprägt, als bei denen mit 3 Kohlenstoffatomen zwischen NCO-Gruppe und nächstem Sauerstoffatom in der Kette. Bei letzteren tritt er aber noch deutlich zu Tage um bei Einbau einer weiteren CH₂-Einheit (Bsp. 1h, Vergleich) nicht mehr aufzutreten.

### Beispiele 2a und 2b Trimerisierung (2a: erfindungsgemäß, 2b: Vergleichsbeispiel)

In 100 ml Dreihalskolben mit Septum für die Katalysatordosierung, Innentemperaturkontrolle und Rückflußkühler wurden unter Magnetrühren 39 g (386 mmol) 2-Methoxyethylisocyanat **1** (Beispiel 2a, erfindungsgemäß) bzw. 38,2 g (386 mmol) n-Butylisocyanat **5** (Beispiel 2b, Vergleich) bei 60°C tropfenweise mit einer 50%igen Lösung von 5-Azoniaspiro[4.5]decanium hydrogendifluorid in 2-Propanol versetzt.

Im erfindungsgemäßen Beispiel 2a setzte nach Zugabe von summarisch 23 mg Katalysatorlösung und kurzer Inkubationszeit eine stark exotherme Reaktion ein, die durch Kühlung mit einem Eisbad auf max. 70°C begrenzt werden konnte. Nach 50 min waren ca. 50% des eingesetzten **1** zu einer Mischung aus Isocyanurat und Iminooxadiazindion umgesetzt. Im weiteren Reaktionsverlauf war ohne zusätzliche Katalysatorzugabe weiterer Monomerumsatz zu verzeichnen. Nach destillativer Abtrennung des nicht umgesetzten Monomers **1** setzte Kristallisation ein. Umkristallisation aus Methylenchlorid / n-Hexan lieferte Einkristalle, m.p.: 45°C, die mittels Röntgenkristallstrukturanalyse als N,N',N" Tris-(2-methoxyethyl)isocyanurat (Trimer aus **1** vom Isocyanurattyp) identifiziert wurden.

Im Vergleichsbeispiel 2b wurde deutlich mehr Katalysatorlösung benötigt (28 mg), der damit nach ca. 45 min erreichbare Umsatz belief sich auf lediglich 14% und stieg anschließend ohne weitere Katalysatorzugabe nur noch sehr langsam an. Auch war der Temperaturanstieg während der Reaktion signifikant moderater. Das nach Monomerabtrennung destillativ isolierte N,N',N" Tris-(n-butyl)isocyanurat, Kp 120°C / 0,01 mbar, fiel als leicht viskose, auch nach Lagerung im Kühlschrank nicht kristallisierende Flüssigkeit an.

Diese Untersuchungen belegen einerseits die signifikant erhöhte Reaktivität der erfindungsgemäßen offenkettigen, ggf. verzweigten, Etherisocyanate wie z.B. **1** auch in NCO-NCO-Reaktionen einerseits und andererseits, dass durch den Ersatz einer Methylengruppe in **5** durch ein Sauerstoffatom (**1**) überraschenderweise Produkte mit deutlich anderen physikalischen Eigenschaften - hier dem Schmelzpunkt - resultieren.

### Beispiele 3a, b und c Trimerisierung (3a und b: erfindungsgemäß, 3c: Vergleichsbeispiel)

In 1-LiterDreihalskolben mit Septum für die Katalysatordosierung, Innentemperaturkontrolle und Rückflußkühler wurden unter mechanischem Rühren 500 g (3,2 mol) Bis(2-isocyanatoethyl)-ether (Beispiel 3a, erfindungsgemäß), 590 g (3,2 mol) Bis(3-isocyanatpropyl)-ether (Beispiel 3b, erfindungsgemäß) bzw. 494 g (3,2 mol) Pentamethylendiisocyanat (Beispiel 2c, Vergleich) bei 60°C tropfenweise mit "Isooctylphoban" (Isomerengemisch, bestehend aus 9-(2,4,4-trimethylpentyl)-9-phosphabicyclo[3.3.1]nonan und 9-(2,4,4-trimethylpentyl)-9-phosphabicyclo[4.2.1]nonan) versetzt bis eine leichte Exothermie und eine kontinuierliche Abnahme des NCO-Gehaltes zu verzeichnen war.

In den erfindungsgemäßen Beispielen 2a bzw. 2b setzte nach Zugabe von summarisch 846 mg bzw. 956 mg Katalysator (0,1 bzw. 0,12 mol-%, bezogen auf Katalysator und eingesetztes Diisocyanat) dieser Effekt ein. Durch gelegentliches Entfernen der externen Wärmequelle waren die Reaktionen gut kontrollierbar bei ca. 60°C durchzuführen. Im Vergleichsbeispiel 3c waren hierfür 12,2 g Katalysator (1,5 mol-%, bezogen auf Katalysator und eingesetztes Diisocyanat) nötig. Im Verlauf von 4 bis 5 Stunden hatten die NCO-Gehalte der Mischungen um jeweils ca. 20% abgenommen. Nach Desaktivierung des Katalysators durch Zugabe elementaren Schwefels (1,1 Äquivalente auf Katalysator), dreißigminütigem Nachrühren bei 60°C und anschließender destillativer Monomerabtrennung resultierten in den erfindungsgemäßen Beispielen 3a und 3b farbhelle (< 50 Apha), viskose Harze, das Produkt aus dem Vergleichsbeispiel 3c wies, dem signifikant höheren Katalysatorverbrauch geschuldet, eine deutlich höhere Farbzahl auf (120 Apha). Die weiteren Daten sind Tabelle 3 zu entnehmen.

**Tabelle 3: Trimerisierungen**

| **Beispiel 3** | **Eingesetztes Diisocyanat** | **NCO-Gehalt [%]** | **Viskosität [mPas]*** |
|---|---|---|---|
| **a** | OCNCH₂CH₂OCH₂CH₂NCO | 14,2** | 3840** |
| **b** | OCNCH₂CH₂CH₂OCH₂CH₂CH₂NCO | 19,5 | 1360 |
| **c** | OCNCH₂CH₂CH₂CH₂CH₂NCO | 23,5 | 5480 |

| | | | |
|---|---|---|---|
| * bei 23°C ** 80%ige Lösung in Butylacetat, das 100%ige Harz ist extrem hochviskos | | | |

Diese Untersuchungen belegen ebenfalls die signifikant erhöhte Reaktivität der speziellen offenkettigen, ggf. verzweigten, Etherisocyanate und andererseits, dass durch den Ersatz einer Methylengruppe durch ein Sauerstoffatom auch bei Diisocyanat-Folgeprodukten Produkte mit deutlich anderen physikalischen Eigenschaften - hier insbesondere im Beispiel 3a die Viskosität - resultieren.

### Beispiel 4: Trimerisierung

In einem 4-LiterDreihalskolben mit Tropftrichter mit Druckausgleich für die Katalysatordosierung, Innentemperaturkontrolle und Rückflußkühler wurden unter mechanischem Rühren 2700 g (14,7 mol) eines Isomerengemisches erhalten gemäß EP 0 764 633 A2, Beispiel 1 (dort als "Dipropylenglykoldiisocyanat, Isomerengemisch) bei 60°C tropfenweise mit summarisch 15,9 g einer 10%igen Lösung von Benzyltrimethylammoniumhydroxid in 2-Ethyl-hexan-1,3-diol so versetzt, dass bei moderater Exothermie eine kontinuierliche Abnahme des NCO-Gehaltes zu verzeichnen war.

Im Verlauf von ca. 6 Stunden war der NCO-Gehalt von eingangs 45,4 % auf 36,6 % gefallen. Die Reaktion wurde durch Zugabe von 2,1 g Di-n-butylphosphat zur Desaktivierung des Katalysators beendet und nach dreißigminütigem Nachrühren bei 60°C und anschließender destillativer Monomerabtrennung resultierten 900 g eines hochviskosen (48 Pas), klaren, nahezu farblosen Polyisocyanatharzes mit 19,2 % NCO-Gehalt.

## Patentansprüche

1. Verwendung mindestens eines offenkettigen, ggf. verzweigten, Etherisocyanats mit einer NCO-Funktionalität ≥ 1, bei dem sich zwischen mindestens einer NCO-Gruppe und mindestens einem Ether-Sauerstoffatom 2 oder 3 Kohlenstoffatome befinden, optional in Gegenwart weiterer Reaktionspartner wie Alkohole, Amine, Wasser, CO₂, oder auch weiterer Isocyanate mit einer NCO-Funktionalität ≥ 1, optional in Gegenwart mindestens eines Katalysators, zur Steigerung der Reaktionsgeschwindigkeit und/oder Reduzierung der optional benötigten Katalysatormenge bei der Isocyanatmodifizierung.

2. Verwendung gemäß Anspruch 1, **dadurch gekennzeichnet, dass** das mindestens eine offenkettige, ggf. verzweigte, Etherisocyanat eine NCO-Funktionalität von 2 aufweist und sich wenigstens zwischen einer der beiden NCO-Gruppen und dem mindestens einen Ether-Sauerstoffatom 2 oder 3 Kohlenstoffatome befinden.

3. Verwendung gemäß Anspruch 1 oder 2, **dadurch gekennzeichnet, dass** mindestens ein weiterer Reaktionspartner ausgewählt aus der Gruppe bestehend aus Alkohole, Amine, Wasser, CO₂ und weiteren Isocyanaten mit einer NCO-Funktionalität ≥ 1, die vorzugsweise keine Ethergruppe enthalten, zugegen ist.

4. Verwendung gemäß einem der Ansprüche 1 bis 3, **dadurch gekennzeichnet, dass** zwischen 1 und 99 Gew.-%, bezogen auf die Gesamtmenge an NCO-Gruppen aufweisenden Verbindungen, des mindestens einen offenkettigen, ggf. verzweigten, Etherisocyanats zum Einsatz kommen, wobei die zu 100 % verbleibende Menge aus ein oder mehreren weiteren Isocyanate mit einer NCO-Funktionalität ≥ 1 besteht.

5. Verwendung gemäß Anspruch 4, **dadurch gekennzeichnet, dass** die Menge des mindestens einen offenkettigen, ggf. verzweigten, Etherisocyanats zwischen 50 und 90 Gew-% liegt.

6. Verwendung gemäß einem der Ansprüche 1 bis 5, **dadurch gekennzeichnet, dass** aus dem mindestens einen offenkettigen, ggf. verzweigten, Etherisocyanat modifizierte Isocyanate mit Urethan-, Harnstoff-, Biuret-, Dimer-, Isocyanurat-, Iminooxadiazindion- und/oder Carbodiimidstruktur hergestellt werden.

7. Zwei-Komponenten-System, enthaltend eine Komponente A), umfassend mindestens ein modifiziertes Isocyanat auf Basis eines offenkettigen, ggf. verzweigten, Etherisocyanats mit einer NCO-Funktionalität ≥ 1, bei dem sich zwischen mindestens einer NCO-Gruppe und mindestens einem Ether-Sauerstoffatom 2 oder 3 Kohlenstoffatome befinden, und eine Komponente B), umfassend mindestens eine NCO-reaktive Verbindung.

8. Zwei-Komponenten-System gemäß Anspruch 7, wobei die mindestens eine NCO-reaktive Verbindung eine Polyhydroxyverbindung, bevorzugt ein Polyetherpolyol, Polyesterpolyol, Polycarbonatpolyol oder Polyacrylatpolyol ist.

9. Formkörper oder Beschichtung, erhältlich oder hergestellt durch, ggf. unter Wärmeeinwirkung und/oder in Anwesenheit eines Katalysators, Härten eines Zwei-Komponenten-Systems gemäß Anspruch 7 oder 8.

10. Verbundbauteil, umfassend einen Werkstoff, der wenigstens mit einem Formkörper oder einer Beschichtung gemäß Anspruch 9 zumindest anteilig verbunden ist.
